(19) Europäisches Patentamt

European Patent Office

Office européen des brevets

(11) **EP 1 081 824 A2**

(12) **EUROPEAN PATENT APPLICATION**

(43) Date of publication:
07.03.2001 Bulletin 2001/10

(51) Int. Cl.[7]: **H02J 7/00**

(21) Application number: 00119123.8

(22) Date of filing: 04.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 03.09.1999 SE 9903153

(71) Applicant:
**Laboratoire d'Electronique Industrielle Departement d'Electricité EPFL**
**1015 Lausanne (CH)**

(72) Inventors:
• **Rufer, Alfred**
  **1138 Villars-sous-Yens (CH)**
• **Barrade, Philippe**
  **Chavannes (CH)**

(74) Representative:
**Johansson, Lars-Erik et al**
**Patech SARL,**
**European Patent Attorney,**
**Case Postale 25**
**1138 Villars-sous-Yens (CH)**

(54) **A method and an apparatus for equalising the voltages over the capacitors in a series connection of capacitors during charging and discharging**

(57) A method and an apparatus for equalising the voltages over the capacitors in a series connection of capacitors during charging and discharging. The apparatus comprises n+1 terminals ($Q_0$-$Q_n$) for connection to terminals ($P_0$-$P_n$) of the individual capacitors ($C_1$-$C_n$) in said series connection of said capacitors. It further comprises a series connection of two transistors ($T_1$, $T_2$; $T_{2'}$, $T_{3'}$; $T_3$, $T_4$; ...) each with a trigger input ($g_1$, $g_2$, ...) connected between the outer terminals in each group of three successive terminals ($Q_0$, $Q_1$, $Q_2$; $Q_1$, $Q_2$, $Q_3$; ... $Q_{n-2}$, $Q_{n-1}$, $Q_n$) and a diode ($D_1$, $D_2$; $D_{2'}$, $D_{3'}$; $D_3$, $D_4$; ...) connected in anti-parallel with each said transistor. The common points between said series connected transistors ($T_1$, $T_2$; $T_{2'}$, $T_3$; $T_3$, $T_4$; ...) and the middle terminal in each said group of terminals are connected by means of an inductor ($L_1$- $L_{n-1}$). A trigger signal generator is arranged having n signal outputs connected to each of said trigger inputs ($g_1$, $g_2$, ...) which generator delivers trigger signals to said inputs in order to switch said transistors from non-conducting to conducting state and vice versa

FIG 3

EP 1 081 824 A2

**Description**

**Technical field**

This invention relates to energy storage by means of capacitors. More particularly, energy storage by means of so called supercapacitors or ultra-capacitors which are electrochemical double layer capacitors or electrical storage devices which have a very high energy storage density simultaneously with a very high power density. These performances give an access to new potential power electronic applications especially in the traction domain where the component weight must be limited. These capacitors might advantageously replace batteries even if their energy density is 10 times lower, thanks to their maintenance free property.

**Background art**

This type of capacitors represents a new generation of electrochemical components for energy storage. They make use of the electrical double layer formed at the interface between the conductive liquid, the electrolyte, and an electrode when a voltage is applied. Thanks to the extremely large area of the electrode material capacitances of up to several thousand Farads can be obtained storing and releasing energy with high efficiency. The capacitors can deliver very high bursts of power for several seconds.

The energy efficiency of the charging and discharging process is increased in a series connection of the individual supercapacitors, each typically rated for low voltage.

Charging and discharging of the supercapacitors could e.g. be carried out by means of a power electronic converter according to co-pending Swedish patent application No. SE 9902460-6 and the publication PCIM-Conference, Nürnberg 23.06.1999, p. 161 "Static converter for complimentary energy storage with battery and supercapacitor".

By a series connection of several supercapacitors the operating voltage is increased in order to reduce the related power losses in the associated power electronic converter. A series connection has, however, the disadvantage that it can lead to an unsymmetrical voltage share between the capacitors, as a result of the physical law corresponding to the voltage rise during the charging process.

Due to differences in the values of C, typically +/- 10% from nominal values, the total voltage over a series connection of capacitors will not be equally distributed between the different capacitors.

If this effect is not compensated for a local over-voltage could appear over one or several capacitors. A local reversal could also appear during the discharge process.

In an attempt to solve the problem it has been proposed to connect individual resistors across each capacitor possibly together with an electronic switch.

The most important disadvantage with this prior art method is the appearance of excessive power losses due to the currents circulating in said resistors

**Brief description of the invention**

Accordingly, it would be desirable to provide means to assure the equal distribution of the total voltage between the series connected capacitors. Such means should of course introduce as low power losses as possible.

It is an object of this invention to provide a new method for equalising the voltages over the capacitors in a series connection of capacitors during charging and discharging.

A further object of the present invention is to provide an apparatus for carrying out said method.

A still further object is to provide an energy storing device including a series connection of capacitors and such an apparatus.

The invention which solves the problems of the prior art solutions is characterised according to the appended claims.

**Brief description of the figures**

Other objects, uses and advantages of this invention will be apparent from the reading of this description which proceeds with reference to the accompanying drawings forming part thereof and wherein:

Figure 1 shows an electric circuit including a series connection of a number of capacitors e.g. supercapacitors for storing electric energy.

Figure 2 shows an energy storing device including a series connection of capacitors and an electronic circuit for voltage equalising according to the invention.

Figure 3 shows more in detail one embodiment of the invention according to figure 2 including four capacitors.

Figure 4 shows in a diagram the total voltage over and current through a circuit according to the invention.

Figure 5 shows in a diagram the voltage sharing on three asymmetrical supercapacitors.

Figure 6a and b show in a diagram the voltage over and the current through an inductor for one method for equalising the voltages according to the invention.

Figure 7a to d show in a diagram corresponding voltages over and currents through transistor T1 and diode D2 for one method for equalising the voltages according to the invention.

Figure 8a to c show in a diagram the total current and corresponding currents through two capacitors in a series of three for one method for equalising the voltages according to the invention.

## Detailed description of the invention

As mentioned above the basic inventive idea concerns a way of equalising the voltages over the individual capacitors in a series connection of capacitors.

It will be described an apparatus (closed loop) for the purpose and a method for controlling that apparatus in order to achieve said equalisation.

The method will be described for the charging mode. It will be evident to anyone skilled in the art that the apparatus will work in an analogue way during the discharging mode.

A second embodiment of the apparatus (open loop) will also be described together with a possible corresponding control method. More elaborated embodiments of the invention will be able to switch between the control methods.

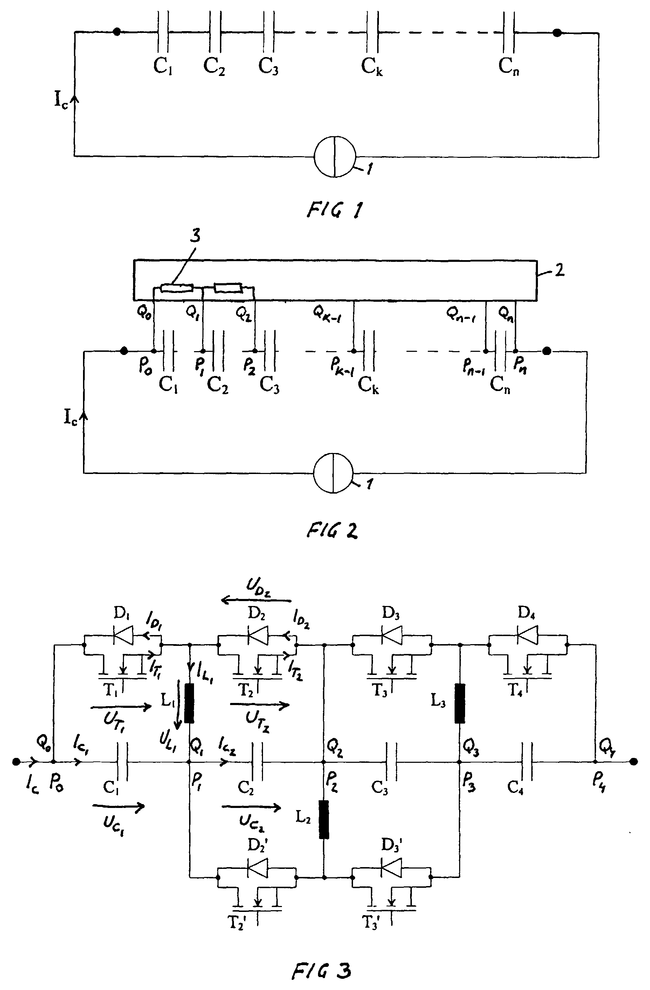

Figure 1 shows an electric circuit including a series connection of a number n of capacitors, e.g. supercapacitors, for storing electric energy.

The charging and discharging current $I_c$ from the associated power electronic converter which current is the same in all the capacitors $C_1$ to $C_n$ is represented as generated by a controlled current source 1.

The voltage over the capacitor $C_k$ in the series of capacitors is given by the formula 1:

$$U_{C_k} = \frac{1}{C_k} \int_0^t i_c \, dt$$

Thus, if the capacitance values are not exactly the same there will be differences in the voltages over the capacitors. As mentioned above this can result in local overvoltages during charging and reverse voltages during discharging.

Figure 2 shows an energy storing device according to the invention including a series connection of capacitors and an apparatus 2 for equalising the voltages over the capacitors according to the invention.

The voltage equalising apparatus 2 is connected to each side on each individual capacitor $C_1$ to $C_n$ in the series connection and has the role of equalising the voltages over the capacitors. This is done by means of a current deviation, through a parallel path to each capacitor. In this way the mean value of the charging current will not be the same in all the series connected capacitors.

In embodiments of the apparatus and corresponding control methods according to the invention, which will be referred to as closed loop embodiments below, the voltage over each capacitor is constantly measured by means of some appropriate means designated 3 in figure 2. In other embodiments, which will be referred to as open loop embodiments, these measuring means are not needed (cf. below).

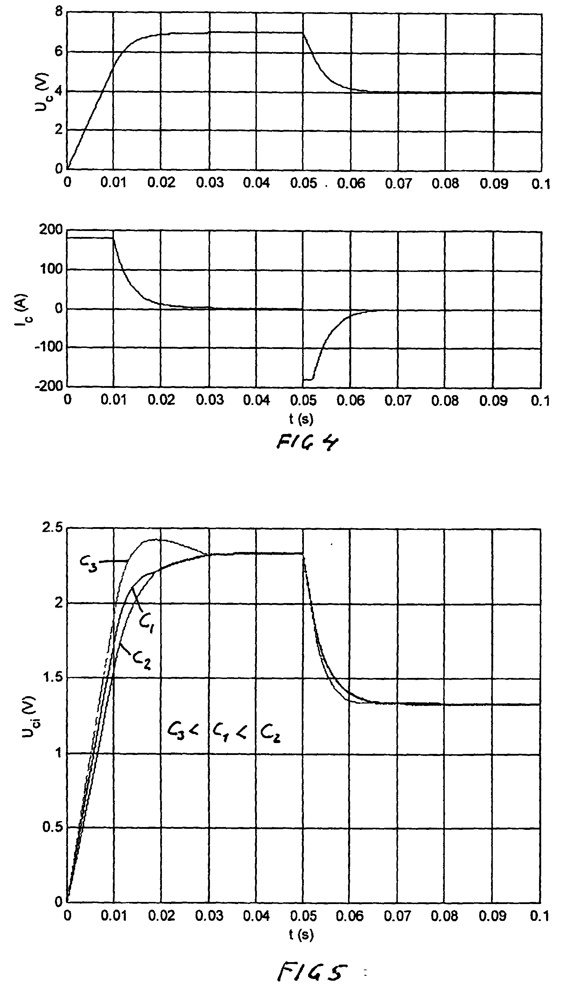

Figure 3 shows more in detail the basic circuitry of one embodiment of the apparatus 2 for equalising the voltages $U_{c1}$, $U_{c2}$ etc. over the capacitors $C_1$, $C_2$ etc. of the invention which apparatus is shown connected to a series connection of four capacitors $C_1$ to $C_4$ in the points $P_0$ - $P_4$. It should be emphasised that the inventive idea is applicable to a series connection of any number of capacitors.

In parallel with each successive pair of capacitors e.g. $C_1$ and $C_2$ a series connection of two transistors $T_1$ and $T_2$ is arranged connected to the points $P_0$ and $P_2$ etc.. The transistors are preferably power MOSFET transistors having a trigger input (gate) $g_1$, $g_2$, etc.. By means of appropriate trigger signals on these inputs the respective transistor could be switched from non-conducting to conducting state. Over each transistor a diode $D_1$ and $D_2$, respectively, is connected in anti-parallel. The common points between the transistors $T_1$ and $T_2$ and the capacitors $C_1$ and $C_2$, respectively, are connected by means of an inductor $L_1$.

An equivalent circuit is connected over the capacitors $C_3$ and $C_4$, and $C_2$ and $C_3$, respectively.

This means that an apparatus according to this embodiment for n series connected capacitors will contain n-1 inductors and 2(n-1) transistors.

Consider one pair of neighbouring capacitors for example $C_1$ and $C_2$. As mentioned above the voltages over these two capacitors are measured separately and constantly in the closed loop embodiment by means of some appropriate equipment 3 (schematically shown in figure 2).

The two voltages are compared in a difference circuit (not shown) and the difference value is used for controlling a trigger signal generator (not shown) which delivers trigger signals to the gates of the two transistors $T_1$ and $T_2$.

If we assume that the capacitor $C_1$ is smaller than the capacitor $C_2$ this means that the same charging current through these capacitors would give a higher voltage over the capacitor $C_1$. Once such a difference has been detected the trigger signal generator is caused to deliver a periodical trigger signal to the transistor $T_1$ which turns said transistor on and off with a given frequency. This means that the charging current of the capacitor $C_1$ will be periodically shunted through the transistor $T_1$ and the inductor $L_1$. Thus, part of the charging current through the capacitor $C_1$ will be devi-

ated. Every time the transistor $T_1$ is turned off the diode $D_2$ is automatically starting to conduct so there will be a positive mean value of the current through the inductor $L_1$ which thus decreases the mean value of the charging current through the capacitor $C_1$.

The transistor $T_2$ is in this case not trigged. With the opposite relation between the voltages over $C_1$ and $C_2$ the transistor $T_2$ and the diode $D_1$ would instead be active. As a consequence it is possible to inject or take out current in the common point $P_1$ between the two capacitors $C_1$ and $C_2$ in order to compensate for the voltage differences over the two capacitors. In other words the respective charging current for the two series connected capacitors will be adjusted to give the same voltage over the two capacitors.

The module comprising the transistors $T_3$ and $T_4$ in combination with the diodes $D_3$ and $D_4$ and the inductor $L_3$ will in the same way equalise the voltages over the capacitors $C_3$ and $C_4$. An equivalent module is connected over the capacitors $C_2$ and $C_3$ to assure the same voltage over all the capacitors $C_1$ to $C_4$.

The duty cycle and frequency of the trigger signal to the transistors can be chosen to give an appropriate time constant to the control system. The time constant could be fixed for the full charging and discharging process or could be changed during the process. It would of course also be possible to chose the instant when e.g. in the charging process the voltage equalising should start.

In the extreme case the duty cycle could be chosen as 100% which means that the trigger signal would not any longer be periodical with a fixed frequency. As a consequence when e.g. the voltage $U_{c1}$ has been detected higher than the voltage $U_{c2}$ the full charging current $I_{c1}$ of the capacitor $C_1$ will be shunted through the transistor $T_1$ and the inductor $L_1$ until the opposite relation between the voltages $U_{c1}$ and $U_{c2}$ has been detected.

In particular applications it could be necessary to introduce limiting e.g. current limiting features in the control algorithm in order to protect circuit elements.

The losses during the operation of the apparatus in closed loop mode as well as open loop mode (described below) will be limited to the conduction losses of the electronic switches in the ON-state, commutation losses in the transistors and diodes and ohmic losses in the coils. The total losses could be kept much lower than the losses in prior art devices.

Figure 4a shows the global voltage $U_c$ over the series connection of the capacitors during a charging process and a partial discharging process. Figure 4b is showing the corresponding current $I_c$ through the device.

Figure 5 shows in a diagram the voltage equalising according to the invention operating on three asymmetrical capacitors. The three curves represent each the voltage over one capacitor during a charging phase and a following discharging phase. By establishing a by-pass current in a parallel branch to each capacitor the apparatus according to the invention equalises the three voltages over the capacitors. In the steady state it can be seen that the voltages have been brought to the same value.

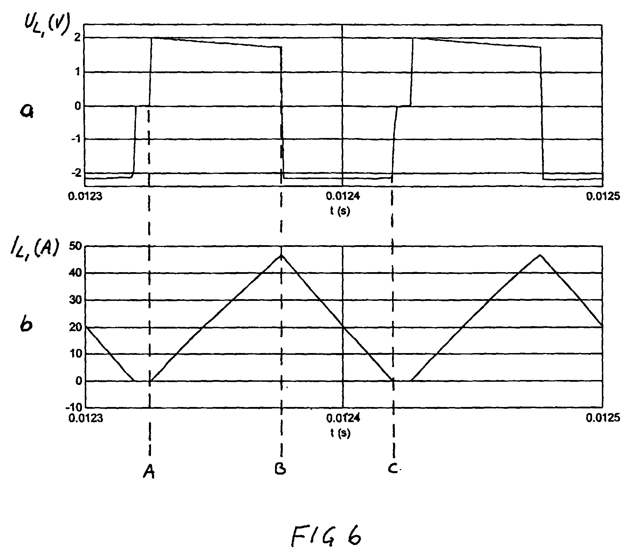

Figure 6a and b show in a diagram the voltage over and the current through an inductor, e.g. inductor $L_1$ in figure 3 for the closed loop mode.

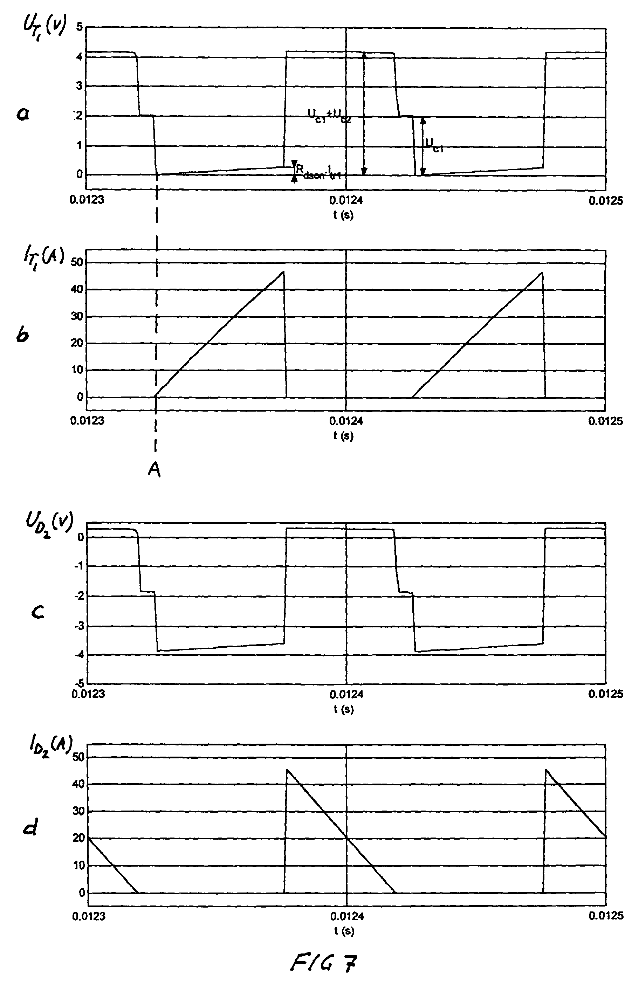

The apparatus is in the illustrated embodiment working in discontinuous current mode as can be seen in figure 6b. The current through the inductor $L_1$ is never changing sign, it is always positive with the reference direction shown in figure 3. This means that there will be no commutation losses in $D_2$. The situation illustrated in the figures 6 and 7 correspond to the case when a difference in the voltages over the capacitors $C_1$ and $C_2$ has been detected and the charging current through $C_1$ should be decreased.

Figure 7a to d show in a diagram corresponding voltages over and currents through transistor $T_1$ and diode $D_2$ for the closed loop mode.

Thus, figure 7a shows the voltage over the transistor $T_1$. During the ON-state, i.e. when current is flowing through the transistor the voltage over the transistor is not equal to zero but increases proportionally to the current. This means that we have to consider a small ohmic loss in the transistor when this is conducting.

When the current is zero through the transistor $T_1$ current is circulating through the diode $D_2$.

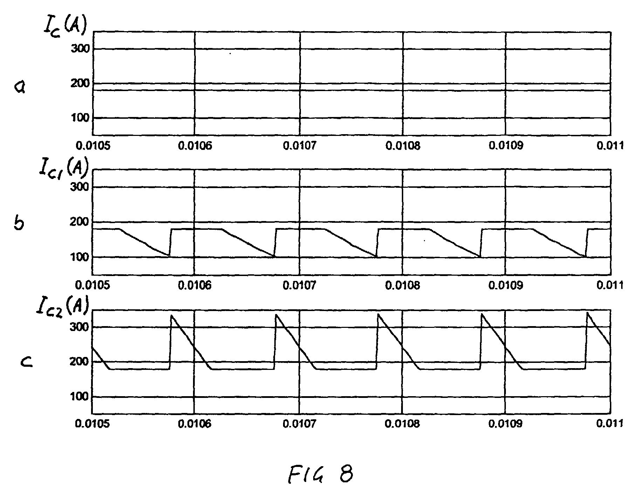

Figure 8a to c show in a diagram the total current $I_c$ and corresponding currents $I_{c1}$ and $I_{c2}$ through two capacitors in a series of three in the closed loop mode. The diagram is showing the case in which $C_2 > C_1 > C_3$. This means that initially $U_{c3} > U_{c1} > U_{c2}$ cf. figure 5. To compensate for this the mean value of $I_{c1}$ must be made lower than the mean value of $I_{c2}$. This relation is also shown in the diagram. The mean values of $I_{c1}$ and $I_{c2}$ are not symmetrical because of the compensation for the initial relation $U_{c3} > U_{c2}$. This is the reason why the ripple of $I_{c2}$ is bigger than the ripple of $I_{c1}$. For an equalisation between two capacitors only, the ripple of the two currents through the capacitors would have been the same.

Another way to equalise the voltages over two capacitors using the circuit arrangement illustrated in figure 3 could work as follows. The voltage equalising between $U_{c1}$ and $U_{c2}$ is achieved by means of periodically switching the transistors $T_1$ and $T_2$ alternatively, which means that when $T_1$ is on $T_2$ is off and vice versa. The pulsating period $T_p$ is constant and equal to $1/f_p$ where $f_p$ is constant.

In this case it is not necessary to measure the voltages over the capacitors in order to create a switching criteria.

The ON-state time of transistor $T_1$ is defined as $t_{on}$ and the OFF-state time is defined as $t_{off}$.

$$T_p = t_{on} + t_{off}$$

The duty cycle D is defined as

$$D = t_{on}/T_p$$

The diodes $D_1$ and $D_2$ will act as described above with reference to figure 3, i.e. when transistor $T_1$ is going off the diode $D_2$ will automatically start to conduct and continues to conduct as long as $I_{L1}$ is positive. When $I_{L1}$ goes negative the transistor $T_2$ takes over and conducts the current in the opposite direction. As a result there will be a continuous current through the inductor L1. The mean value of the current through the inductor, positive or negative, will vary in relation to the difference between $U_{c1}$ and $U_{c2}$.

If a 50 % duty cycle is used the voltages over two successive capacitors for instance $C_1$ and $C_2$ will be equalised and the mean value of the voltage across the common inductor $L_1$ will be zero and the mean value of the current through that inductor will also be zero.

If we as above assume that the capacitance of $C_1$ is smaller than the corresponding capacitance of $C_2$ then the voltage $U_{c2}$ will initially be lower according to formula 1 above. As a consequence, still with a 50 % duty cycle, the mean value of the voltage over the inductor $L_1$ will not be equal to zero which means that a current will be driven through the inductor $L_1$ which will equalise the voltages of the two capacitors $C_1$ and $C_2$.

In an apparatus equalising the voltages over more than two capacitors it would be an advantage to have a phase difference between the trigger signals for the separate pairs of transistors.

The two methods for equalising described above could in certain embodiments be used together so that e.g. one is used during charging and the other during discharging A switch between the methods could also be envisaged during charging or discharging.

The discontinuous control mode gives the lowest losses.

When the transistors T1, T2 ...are of a MOSFET type with very low internal resistance the physical components D1, D2....would not be necessary. The internal capacitance and internal diode of the respective transistor will take over the function of the diodes D1, D2...during the transition period. Current in the negative direction is taken over by the transistor itself. In order to implement such a solution the voltage across the transistor has to be measured in order to set the correct trigg-time. By means of this embodiment the losses could be decreased even more.

**Claims**

1. An apparatus (2) for equalising the voltages ($U_{c1}$-$U_{cn}$) over individual capacitors ($C_1$-$C_n$) in a series connection of said capacitors during charging and discharging of said capacitors, **characterised in that**

it comprises n+1 terminals ($Q_0$-$Q_n$) for connection to the terminals ($P_0$-$P_n$) of the individual capacitors ($C_1$-$C_n$) in said series connection of said capacitors,

it further comprises a series connection of two transistors ($T_1$, $T_2$; $T_{2'}$, $T_{3'}$; $T_3$, $T_4$; ...) each with a trigger input ($g_1$, $g_2$, ...) connected between the outer terminals in each group of three successive terminals ($Q_0$, $Q_1$, $Q_2$; $Q_1$, $Q_2$, $Q_3$; ...$Q_{n-2}$, $Q_{n-1}$, $Q_n$) and a diode ($D_1$, $D_2$; $D_{2'}$, $D_{3'}$; $D_3$, $D_4$; ...) connected in anti-parallel with each said transistor

the common points between said series connected transistors ($T_1$, $T_2$; $T_{2'}$, $T_{3'}$; $T_3$, $T_4$; ...) and the middle terminal in each said group of terminals are connected by means of an inductor ($L_1$- $L_{n-1}$)

it further comprises a trigger signal generator having n signal outputs connected to each of said trigger inputs ($g_1$, $g_2$, ...) which generator delivers trigger signals to said inputs in order to switch said transistors from non-conducting to conducting state and vice versa.

2. An apparatus (2) according to claim 1, **characterised in that**

it further comprises voltage measuring means (3) connected to each successive pair of terminals for measuring the voltage ($U_{c1}$, $U_{c2}$,...$U_{cn}$) between said terminals ($Q_0$, $Q_1$; $Q_1$, $Q_2$;... $Q_{n-1}$, $Q_n$)

and means for creating the difference between the measured voltages ($U_{c1}$, $U_{c2}$; $U_{c2}$, $U_{c3}$;... $U_{cn-1}$, $U_{cn}$) for two successive pairs of terminals which means are connected to said trigger signal generator for controlling the delivery of trigger signals to the inputs of the two corresponding transistors ($T_1$, $T_2$;$T_{2'}$,$T_{3'}$; $T_3$, $T_4$; ...).

FIG 1

FIG 2

FIG 3

6

FIG 4

FIG 5

FIG 6

FIG 7

FIG 8